(19) Europäisches Patentamt
European Patent Office
Office européen des brevets

(11) **EP 1 602 001 B1**

(12) **FASCICULE DE BREVET EUROPEEN**

(45) Date de publication et mention
de la délivrance du brevet:
**27.05.2009 Bulletin 2009/22**

(51) Int Cl.:
*G02B 17/04* (2006.01)   *G01N 21/88* (2006.01)
*G01N 21/956* (2006.01)   *H05K 13/00* (2006.01)

(21) Numéro de dépôt: **04709181.4**

(22) Date de dépôt: **09.02.2004**

(86) Numéro de dépôt international:
**PCT/CH2004/000074**

(87) Numéro de publication internationale:
**WO 2004/079427 (16.09.2004 Gazette 2004/38)**

(54) **DISPOSITIF OPTIQUE ET MODULE D INSPECTION**

OPTISCHE EINRICHTUNG UND INSPEKTIONSMODUL

OPTICAL DEVICE AND INSPECTION MODULE

(84) Etats contractants désignés:
**AT BE BG CH CY CZ DE DK EE ES FI FR GB GR HU IE IT LI LU MC NL PT RO SE SI SK TR**

(30) Priorité: **07.03.2003 CH 365032003**

(43) Date de publication de la demande:
**07.12.2005 Bulletin 2005/49**

(73) Titulaire: **ISMECA Semiconductor Holding SA**
**2300 La Chaux-de-Fonds (CH)**

(72) Inventeur: **SALVI, Aldo**
**CH-2300 La Chaux-de-Fonds (CH)**

(74) Mandataire: **P&TS**
**Patents & Technology Surveys SA**
**Rue des Terreaux 7,**
**Postfach 2848**
**2001 Neuchâtel (CH)**

(56) Documents cités:
**EP-A- 1 139 090        WO-A-02/17357**
**WO-A-02/44651        WO-A-03/032252**
**DE-A- 19 821 800     GB-A- 191 224 159**
**JP-A- 06 167 603       US-A- 3 668 304**
**US-A- 5 909 285        US-A1- 2002 085 199**
**US-B1- 6 242 756       US-B1- 6 307 210**

**Description**

La présente invention concerne un module d'inspection comprenant un dispositif optique. La présente invention concerne en particulier un module d'inspection permettant la capture simultanée, par un dispositif de prise de vues, d'une image de la face inférieure ou supérieure d'un objet et de l'image d'au moins une face latérale du même objet.

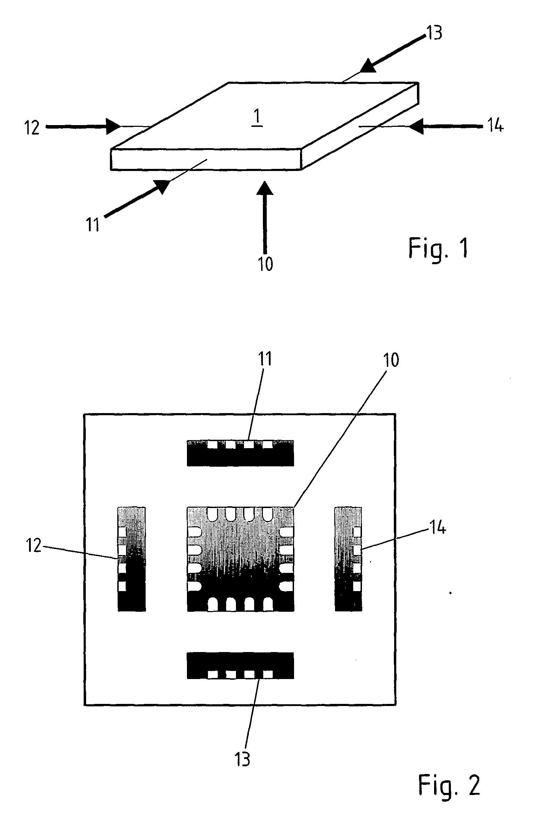

De tels modules sont par exemple utilisés pour l'inspection de composants électroniques, par exemple de composants sans pattes (Leadless: QFN, MLP,..), de dies ou de composants à pattes formées. Ils comprennent généralement un système de vision vers lequel sont dirigées l'image de la face inférieure ou supérieure d'un composant à inspecter et l'image d'au moins une de ses faces latérales. Le système de vision capture ces images simultanément pour par exemple les représenter ensemble sur un écran et/ou les traiter numériquement en vue de la détection d'éventuelles anomalies du composant. Certains modules d'inspection permettent en particulier la capture simultanée de l'image de la face inférieure 10 (ou supérieure) et des images des quatre faces latérales 11, 12, 13, 14 d'un même composant 1 illustré schématiquement à la fig. 1, on parle alors d'inspection 5S (5 sides). La figure 2 illustre un exemple de représentation d'un composant électronique par le système de vision d'un dispositif d'inspection 5S. L'image de la face inférieure 10 du composant est visible au centre de la représentation, tandis que les images de ses quatre faces latérales 11, 12, 13, 14 sont visibles sur les côtés.

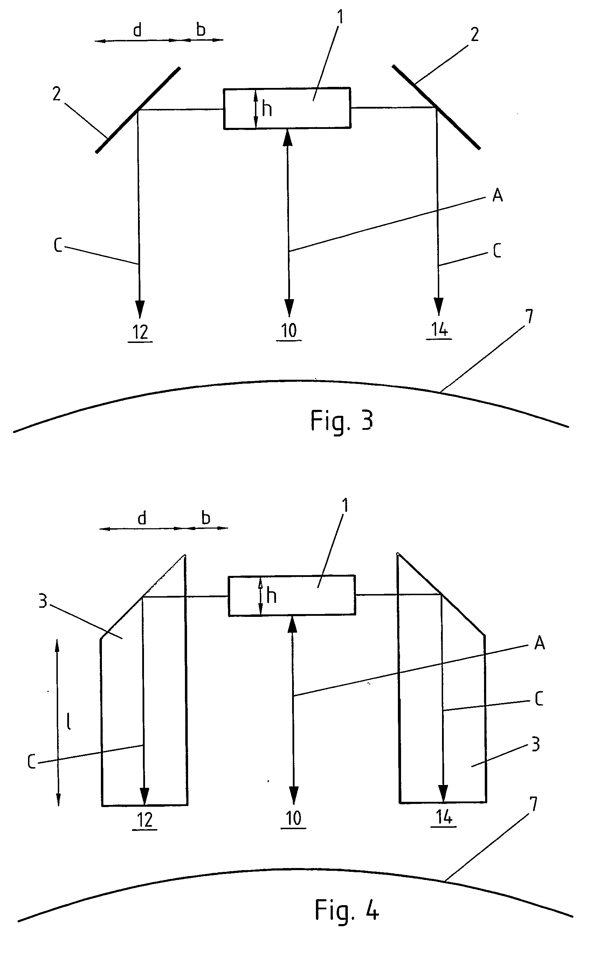

La figure 3 illustre schématiquement le dispositif optique d'un module d'inspection de l'art antérieur. Les images des faces latérales 12, 14 du composant 1 sont dirigées vers le système de vision 7, par exemple l'objectif d'une caméra, à l'aide de miroirs 2 disposés sur les côtés du composant 1 à inspecter. Pour des raisons de lisibilité, seuls deux miroirs 2 sont représentés sur la figure 3. Dans le cas d'un dispositif optique permettant une inspection 5S, ce dernier comprend cependant quatre miroirs, chaque miroir étant disposé en face d'une des quatre faces latérales du composant 1.

De la figure 3, il ressort clairement que la longueur du chemin optique A de l'image centrale 10 n'est pas égale à la longueur du chemin optique c des images latérales 12, 14. La différence de longueur $\Delta l_o$ entre ces deux chemins est de :

$$\Delta l_o = b + \frac{d}{2} + \frac{h}{2} \ .$$

Dans la pratique cette valeur représente souvent plusieurs millimètres, ce qui est généralement plus grand que la profondeur de champ des objectifs utilisés par le système de vision 7, particulièrement en cas d'inspection de très petits composants 1 nécessitant l'utilisation d'objectifs fortement grossissants. Il est alors difficile, voire impossible dans certains cas, d'avoir simultanément l'image centrale 10 et les images latérales 11, 12, 13, 14 parfaitement nettes. Au moins une des images étant légèrement floue, cela génère des erreurs de mesure ou un manque de précision dans l'inspection de la surface du composant 1.

Un exemple de dispositif selon cet art antérieur est décrit dans WO02/44651.

EP-A2-1139090 décrit un autre dispositif permettant d'obtenir des images d'une seule face d'un objet selon deux directions d'observation différentes. La longueur apparente des deux chemins optiques est identique. Ce dispositif n'est pas adapté à la vision de deux faces distinctes de l'objet.

D'autres dispositifs sont décrits dans les documents DE 19821800 et WO 10217357.

Un but de la présente invention est donc de proposer un module d'inspection avec un dispositif optique permettant d'éviter les inconvénients des dispositifs optiques de l'art antérieur.

Un but de la présente invention est en particulier de proposer un module d'inspection avec un dispositif optique permettant la représentation nette et simultanée d'une image centrale d'un objet et d'au moins une image latérale du même objet, même pour de petits objets.

Un autre but de l'invention est de proposer un module d'inspection permettant l'inspection visuelle simultanée de la face inférieure et/ou supérieure d'un composant de petite taille et d'au moins une de ses faces latérales dans des conditions optimales.

Ces buts sont atteints par un module d'inspection possédant les caractéristiques de la revendication indépendante, des variantes avantageuses étant en outre données par les revendications dépendantes.

Le module d'inspection comporte un dispositif optique pour la représentation d'une image centrale d'un objet et d'au moins une image latérale du même objet, la longueur du chemin optique réel de l'image centrale étant différente de la longueur du chemin optique réel de l'image latérale et la longueur du chemin optique apparent de l'image centrale étant égale à la longueur du chemin optique apparent de l'image latérale et par un module pour l'inspection optique d'objets comprenant un tel dispositif optique et un système optique permettant la capture simultanée d'une image centrale de l'objet et d'au moins une image latérale de ce même objet. Le module comporte en outre un éclairage pour illuminer la face inférieure ou supérieure de l'objet.

Les chemins optiques apparents de l'image centrale et de l'image latérale étant identiques, ces deux images peuvent être capturées nettes simultanément par un seul système de vision.

La présente invention sera mieux comprise à l'aide de la description d'une variante préférentielle, illustrée par les figures 1 à 8, où:

la figure 1 discutée précédemment illustre schématiquement le principe d'une inspection 55,

la figure 2 discutée précédemment illustre une représentation d'un composant électronique par le système de vision d'un dispositif d'inspection 55,

la figure 3 discutée précédemment illustre schématiquement le principe de fonctionnement d'un dispositif optique de l'art antérieur,

la figure 4 illustre schématiquement le principe de fonctionnement du dispositif optique selon l'invention,

la figure 5 illustre les effets d'un matériau possédant un indice de réfraction différent de celui de l'air sur un rayon de lumière le pénétrant,

la figure 6 représente un module d'inspection selon une version préférentielle de l'invention,

la figure 7 représente un exemple d'intégration d'un module d'inspection selon l'invention à un système d'inspection complet sur une ligne de traitement des composants.

La figure 4 illustre schématiquement un dispositif optique selon l'invention. Il comprend des prismes 3 disposés de manière à laisser suffisamment de place entre eux pour pouvoir y placer un objet, par exemple un composant électronique 1, à inspecter. Pour des raisons de lisibilité, seuls deux prismes 3 sont représentés l'un en face de l'autre à la figure 4. Le nombre de prismes 3 est cependant déterminé selon les besoins, par exemple en fonction du nombre de faces latérales de l'objet à inspecter simultanément. Dans le cas d'inspection 5S en particulier, le dispositif optique de l'invention comprend de préférence quatre prismes disposés en croix autour du composant à inspecter, selon le principe illustré à la figure 4. Il est cependant également envisageable, dans le cadre de l'invention, d'imaginer des dispositifs optiques possédant trois prismes disposés en triangle pour l'inspection d'un objet possédant trois faces latérales, etc.

Le dispositif optique de l'invention est associé à un système de vision 7, représenté partiellement et schématiquement sur la figure 4, permettant la capture et éventuellement le traitement et/ou la représentation des images renvoyées par le dispositif optique. Pour ce faire, le système de vision 7 comprend de préférence un dispositif de prise de vue, par exemple une caméra, dont l'objectif est placé de manière à pouvoir capturer les images renvoyées par le dispositif optique. Il est également envisageable, notamment pour des raisons d'encombrement, d'orienter l'objectif du dispositif de prise de vue selon une autre direction, par exemple perpendiculairement à la direction de sortie des images du dispositif optique, et de rediriger ces dernières vers le dispositif de prise de vue, par exemple à l'aide d'un dispositif de renvoi non représenté sur la figure 4 et comprenant par exemple un prisme ou un miroir. L'utilisation d'un dispositif de renvoi permet ainsi une plus grande liberté dans le placement du dispositif de prise de vue par rapport au dispositif optique, ce qui est souvent désirable, voire nécessaire, particulièrement lorsque la place sous le dispositif optique, par exemple, est limitée.

Le composant 1 à inspecter est temporairement placé entre les prismes 3, face au système de vision 7. Il est de préférence maintenu dans cette position par sa face opposée au système de vision 7, par exemple par sa face supérieure, à l'aide d'un porte-composant non représenté, par exemple une tête d'aspiration d'un convoyeur de composants électroniques.

L'image centrale 10 du composant 1, par exemple l'image de sa face inférieure, est ainsi capturée directement par le système de vision 7, tandis que ses images latérales 12, 14 sont réfléchies et redirigées vers le système de vision 7 à travers les prismes 3. Le dispositif optique de l'invention comprend ainsi un prisme 3 pour chaque face latérale à inspecter. Dans le cas d'un dispositif optique permettant une inspection 55, par exemple, ce dernier comprend quatre prismes 3 disposés en croix autour du composant, chaque prisme 3 faisant face à une de ses faces latérales.

Dans la variante illustrée à titre d'exemple à la figure 4, l'image centrale 10 du composant 1 est l'image de sa face inférieure qui est capturée directement par le système de vision 7 placé sous le dispositif optique. Les prismes 3 sont donc disposés de manière à rediriger les images des faces latérales 12, 14 vers le bas également, en direction du système de vision 7. L'homme du métier comprendra cependant qu'il est parfaitement envisageable, dans le cadre de l'invention, de maintenir le composant par sa face inférieure et de placer le système de vision face à la face supérieure du composant. Les prismes sont alors de préférence orientés de manière à rediriger les images latérales également vers le haut, afin que le dispositif optique permette l'inspection simultanée de la face supérieure du composant, qui est alors l'image centrale, et d'au moins une de ses faces latérales.

Les prismes 3 sont constitués d'une matière translucide possédant un indice de réfraction différent de celui de l'air. La longueur du chemin optique apparent des images latérales les traversant est ainsi différente de la longueur du chemin optique réel de ces images. Selon l'invention, ainsi qu'expliqué plus loin, les dimensions 1, d des prismes 3 et/ou leur indice de réfraction sont choisis de sorte que la longueur du chemin optique apparent des images latérales 12, 14 soit égale à la longueur du chemin optique apparent de l'image centrale 10 malgré que leurs chemins optiques réels soient de longueurs différentes. L'image centrale 10 et les images latérales 12, 14 qui sont capturées par le système de vision 7 parcourant toutes un chemin optique apparent de même longueur, elles apparaîtront nettes pour la même distance focale du système de vision 7. Elles pourront donc être toutes représentées nettement et simultanément par le système de vision, permettant ainsi par exemple une inspection visuelle optimale de la surface du composant.

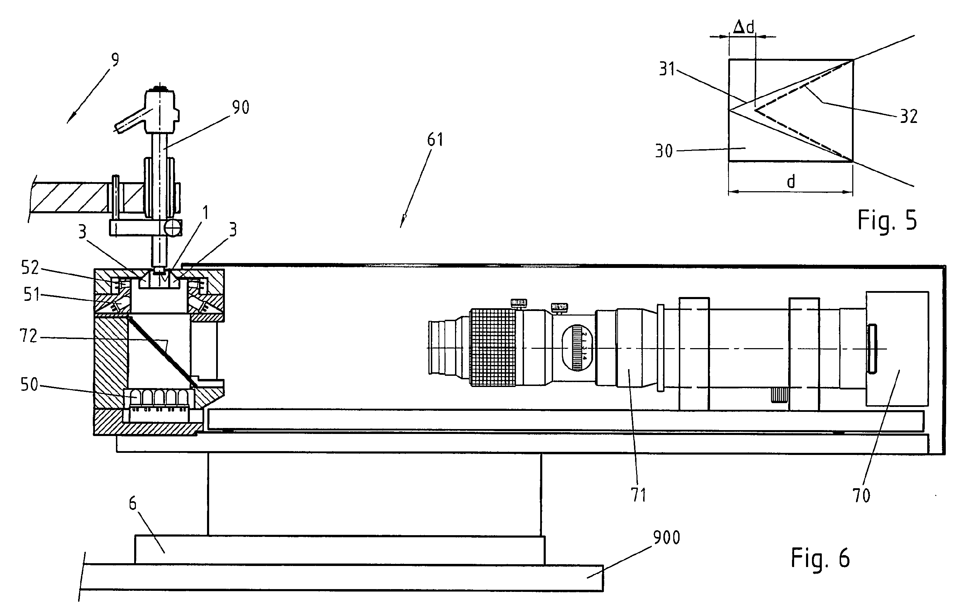

Le principe de l'invention sera mieux compris à l'aide du rappel théorique ci-dessous illustré par la figure 5: un objet observé à travers une lamelle optique 30 d'indice de réfraction n et d'épaisseur d apparaît plus proche qu'il n'est en réalité. Le chemin optique apparent 32 de son image est donc réduit par rapport au chemin optique réel 31. Le trait continu sur la figure 5 représente le chemin optique réel 31, tandis que le trait discontinu représente le chemin optique apparent 32. La différence $\Delta$d entre la distance réelle à l'objet et la distance apparente est calculée par:

$$\Delta d = d \cdot \frac{(n-1)}{n} \; .$$

Selon l'invention illustrée à titre d'exemple à la figure 4, les différences de longueur de chemin optique observées dans les dispositif optiques de l'art antérieur sont ainsi compensées par l'utilisation de prismes 3 pour la redirection et la conduction des images latérales vers le système de vision 7. Les dimensions d, I des prismes 3 ainsi que l'indice de réfraction n du matériau utilisé sont choisis de manière à ce que la longueur du chemin optique apparent des images latérales 12, 14 soit la même que la longueur du chemin optique apparent de l'image centrale 10.

Dans l'exemple de la figure 4, aucun élément optique n'est disposé entre la face inférieure du composant 1 et le système de vision 7. L'image centrale est ainsi capturée directement par ce dernier, sans autre élément intermédiaire que l'air dont l'indice de réfraction est généralement très proche de 1. La longueur du chemin optique apparent de l'image centrale 10 est ainsi identique à la longueur de son chemin optique réel A.

Sous l'effet des prismes 3, la différence entre la longueur du chemin optique réel c des images latérales 12, 14 et la longueur de leur chemin optique apparent est en revanche égale à :

$$\Delta I_p = (I+d) \cdot \frac{(n-1)}{n} \; .$$

La différence entre la longueur du chemin optique réel c des images latérales 12, 14 et la longueur du chemin optique réel A de l'image centrale 10 est quant à elle de :

$$\Delta I_o = b + \frac{d}{2} + \frac{h}{2} \; ,$$

où h est la hauteur du composant 1.

Afin de compenser cette différence de longueur des chemins optiques réels c et A par la différence entre le chemin optique réel c des images latérales et leur chemin optique apparent, les prismes 3 doivent être dimensionnés pour satisfaire l'équation :

$$\Delta I_0 = \Delta I_p \; ,$$

qui est équivalente à :

$$b + \frac{d}{2} + \frac{h}{2} = (I+d) \cdot \frac{(n-1)}{n} \; .$$

Lorsque cette équation est satisfaite, la longueur du chemin optique apparent des images latérales 12, 14 est égale à la longueur du chemin optique apparent de l'image centrale 10. La distance focale du système de vision 7 peut ainsi être réglée de sorte que les images latérales 12, 14 et l'image centrale 10 soient nettes simultanément.

En pratique, la hauteur h du composant 1, la distance b entre le composant 1 et le prisme 3 et l'épaisseur d du prisme 3 sont définis par des conditions mécaniques et d'imagerie. On ajuste donc la longueur I du prisme afin d'obtenir l'égalité énoncée ci-dessus.

Ces dimensions sont par exemple:

b = 1 mm
d = 3,2 mm
h = 1 mm
n = 1,52 (BK7)

Dans ce cas, la longueur du prisme doit être de : I = 5,9 mm.

Dans la variante préférentielle du dispositif de l'invention décrite ci-dessus à titre d'exemple, les prismes 3 sont tous identiques et disposés de manière à ce que la distance entre eux et la face latérale correspondante du composant 1 à inspecter soit la même pour chacun. L'homme du métier comprendra cependant qu'il est possible, dans le cadre de l'invention, de disposer chaque prisme à une distance différente de la face latérale dont il doit rediriger l'image. Les dimensions I, d et/ou l'indice de réfraction n peuvent alors être différents pour chaque prisme du dispositif afin de compenser les différences de longueur entre les chemins optiques réels de chaque image.

Selon les besoins, les prismes 3 peuvent également être remplacés ou accompagnés par d'autres types d'éléments optiques non représentés permettant également de modifier la longueur apparente du chemin optique des images. Il est par exemple envisageable, dans le cadre de l'invention, de compenser les différences de longueur des chemins optiques réels des différentes images 10, 11, 12, 13, 14 à l'aide d'un ou de plusieurs conducteurs optiques possédant par exemple chacun des dimensions et/ou des indices de réfraction différents, placés sur le chemin optique des images latérales et/ou sur le chemin optique de l'image centrale.

Selon l'invention, le dispositif optique est intégré à un module d'inspection optique permettant par exemple d'inspecter des composants électroniques de 2 à 12 mm de côté. L'homme du métier comprendra cependant qu'il est envisageable, dans le cadre de l'invention, d'adapter les dimensions du dispositif optique à l'inspection de composants d'autres dimensions, en particulier à l'inspection de composants plus petits.

Selon une variante préférentielle de l'invention illustrée en coupe sur la figure 6, le module d'inspection optique comprend :

- un dispositif optique selon l'invention comprenant par exemple quatre prismes 3, dont seuls deux sont représentés sur la figure 6, disposés en croix pour permettre une inspection 55 des composants,

- trois éclairages de préférence configurables par logiciel: un éclairage coaxial 50, un premier éclairage annulaire 51 et un deuxième éclairage annulaire 52,

- un système de vision comprenant une caméra digitale 70 à haute résolution, par exemple au moins 1400 x 1050 pixels, équipée de préférence d'un zoom 71 permettant d'adapter le champ de vue du système de vision à la taille des composants.

Dans sa variante préférentielle, le module optique est adapté à une utilisation sur une ligne de traitement des composants électroniques articulée par exemple autour d'un convoyeur circulaire 9 partiellement représenté. Une telle ligne de traitement comprend généralement une succession de postes de traitement, par exemple des postes de test, d'inspection et/ou de conditionnement, disposés autour d'un convoyeur circulaire 9 central transportant les composants 1 d'un poste de traitement à l'autre à l'aide de porte-composants, par exemple des têtes d'aspiration 90, disposés à sa périphérie. Les mouvements du convoyeur circulaire 9 sont indexés de manière à présenter à chaque pas un nouveau composant électronique à chaque poste de traitement.

La ligne de traitement est de préférence commandée et contrôlée par un système de contrôle non représenté permettant en particulier la coordination de tous les éléments de la ligne.

Le module optique comprenant le dispositif optique de l'invention est ainsi disposé autour du convoyeur 9 de la ligne de traitement. Il est de préférence fixé sur une plaque de support 6 comportant des éléments de fixation non représentés permettant sa fixation sur un plateau fixe 900 sous le convoyeur 9. Le plateau fixe 900 présente de préférence les mêmes éléments de fixation non représentés à chaque emplacement prévu pour un poste de traitement. Le module optique peut ainsi être intégré de manière parfaitement modulaire à la ligne de traitement.

Lors du placement du module optique sous le convoyeur 9, le dispositif optique comprenant les prismes 3 est placé de telle manière qu'à chaque pas du convoyeur 9 un composant électronique 1 se trouve précisément au-dessus de son centre, de préférence à égale distance de chaque prisme 3. Durant le temps d'arrêt du convoyeur 9, la tête d'aspiration 90 maintenant le composant 1 par sa surface supérieure est abaissée afin que le composant 1 se retrouve à l'intérieur du dispositif optique, dans la position illustrée sur la figure 6, et puisse ainsi être inspecté par le système de vision 7.

Pour des raisons d'encombrement, la caméra 70 est disposée horizontalement. Son axe de prise de vue est ainsi horizontal. Les images centrale et latérales sortant du dispositif optique de l'invention sont donc redirigées dans l'axe de prise de vues du système de vision, par exemple à l'aide d'un prisme supplémentaire 72, de préférence unique.

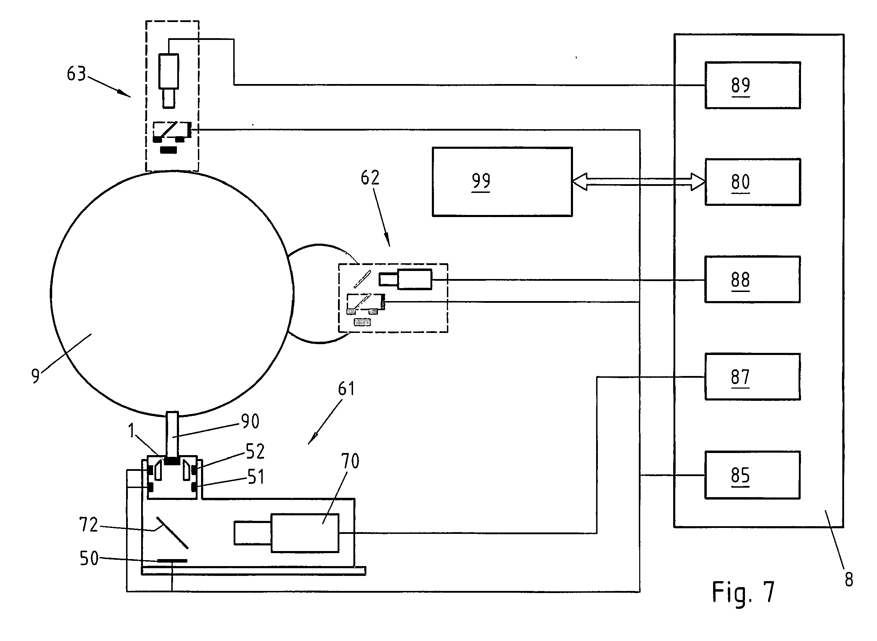

En référence à la figure 7, le module optique 61 de l'invention est par exemple intégré à une ligne de traitement des composants articulée autour d'un convoyeur circulaire 9 et commandée par un système de contrôle vision 8, implémenté au moins partiellement par exemple sur un ordinateur personnel ou tout autre calculateur numérique. Le système de contrôle vision 8 comprend de préférence une carte d'entrée/sortie 80 permettant par exemple de communiquer avec le système de contrôle 99 du convoyeur 9, assurant ainsi une coordination optimale de ces éléments.

Le système de contrôle vision 8 commande également de préférence l'ensemble des composants du module optique 61, en particulier les éclairages 50, 51, 52 et le dispositif de prise de vues 70. Les éclairages 50, 51, 52 du module optique de l'invention sont par exemple configurés et commandés à l'aide d'un module de contrôle de la lumière 85 faisant partie du système de contrôle vision 8 et implémenté sur l'ordinateur personnel, tandis que le dispositif de prise de vues 70 est piloté par un module de capture d'images 87 permettant par exemple le déclenchement de la prise de vue et le traitement des images capturées.

L'inspection par exemple 5S effectuée à l'aide du module optique 61 de l'invention peut être complétée, sur la ligne de traitement des composants, par exemple par deux modules d'inspection optiques supplémentaires, un module d'inspection sur table 62 permettant de contrôler l'état de la surface supérieure des composants et un module d'inspection en bande 63 permettant d'effectuer un dernier contrôle visuel des composants avant ou au cours de leur conditionnement, par exemple dans des bandes alvéolées. Chacun de ces modules d'inspection est de préférence également piloté par le système de contrôle vision 8 et leur éclairage est par exemple également contrôlé par le module de contrôle de la lumière 85. Les modules d'inspection 62 et 63 comportent également de préférence chacun un dispositif de prise de vues dont les images sont par exemple traités par des modules de captures d'images 88, respectivement 89 du système de contrôle vision 8.

Selon une variante de l'invention, le module d'inspection optique 61 de l'invention comprend son propre système de contrôle indépendant dialoguant avec le système de contrôle vision 8 de la ligne de traitement à travers des interfaces entrée/sortie adaptées.

Selon sa variante préférentielle, le dispositif optique de l'invention est utilisé pour l'inspection simultanée de la face inférieure ou supérieure et d'au moins une face latérale de composants électroniques. Les dimensions de la plupart des composants électroniques et les dimensions des dispositifs pour leur inspection se prêtent effectivement bien à la correction du chemin optique par la longueur du prisme 3, dont la longueur nécessaire reste dans des dimensions acceptables. L'homme du métier comprendra cependant que le principe de l'invention est applicable à d'autres domaines nécessitant par exemple la représentation nette et simultanée par un même système de vision de plusieurs faces d'un objet de grandes dimensions. Certaines applications, cependant, risquent de nécessiter le recours à des prismes de dimensions peu pratiques, voire irréalisables.

Le dispositif de l'invention est décrit ci-dessus dans le cadre de l'inspection de composants électroniques. L'homme du métier comprendra cependant que le dispositif optique de l'invention peut parfaitement être utilisé pour la représentation simultanée d'une image centrale et d'au moins une image latérale de tout autre type d'objet.

**Revendications**

1. Module pour l'inspection optique d'objets comprenant un dispositif optique pour la représentation d'une image centrale (10) de la face inférieure ou supérieure d'un objet (1) et d'au moins une image latérale (11, 12, 13, 14) d'au moins une face latérale dudit objet (1),

   la longueur du chemin optique réel de ladite image centrale (10) étant différente de la longueur du chemin optique réel de ladite au moins une image latérale (11, 12, 13, 14),
   le dispositif comportant en outre un système optique (7) permettant la capture simultanée de l'image centrale (10) de l'objet (1) et d'au moins l'image latérale (11, 12, 13, 14) dudit objet (1), et au moins un prisme (3),
   la longueur du chemin optique apparent de ladite image centrale (10) étant égale à la longueur du chemin optique apparent de ladite au moins une image latérale (11, 12, 13, 14), **caractérisé en ce que** la section dudit prisme est trapézoïdale et est constituée d'une portion rectangulaire pour modifier la longueur dudit chemin optique apparent et d'une portion triangulaire pour modifier la longueur dudit chemin optique apparent et pour la redirection de ladite au moins une image latérale (11, 12, 13, 14), de manière à satisfaire l'équation:

$$b + \frac{d}{2} + \frac{h}{2} = (l + d) \cdot \frac{(n-1)}{n}$$

   dans laquelle b est la distance entre ledit objet et ledit prisme ; d est l'épaisseur dudit prisme ; h est la hauteur dudit objet ; l est la longueur de la portion rectangulaire dudit prisme ; et n est l'indice de réfraction dudit prisme.

2. Module selon la revendication 1, ledit système optique (7) comprenant un deuxième prisme (72) ou un miroir pour rediriger ladite image centrale (10) et ladite au moins une image latérale (11, 12, 13, 14) en direction d'un dispositif de prise de vues (70).

3. Module selon la revendication 2, comportant un premier éclairage (50) pour illuminer ladite face inférieure ou supérieure, et au moins un éclairage annulaire (51, 52).

4. Module selon la revendication 3, la direction d'illumination dudit premier éclairage étant perpendiculaire à ladite face inférieure ou supérieure.

5. Module selon la revendication 4, la lumière dudit premier éclairage traversant ledit deuxième prisme (72) ou miroir.

**Claims**

1. Module for the optical inspection of objects, comprising an optical device for representing a central image (10) of the lower or upper side of the object (1) and at least one lateral image (11, 12, 13, 14) of at least one lateral side of said object (1),

   the length of the real optical path of said central image (10) being different from the length of the real optical path of said at least one lateral image (11, 12, 13, 14),
   the device comprising additionally an optical system (7) allowing a central image (10) of the object (1) and at least one lateral image (11, 12, 13, 14) of said object (1) to be captured simultaneously and at least one prism (3),

the length of the apparent optical path of said central image (10) being equal to the length of the apparent optical path of said at least one lateral image (11, 12, 13, 14),

**characterized in that** the section of said prism is trapezoidal and is constituted by a rectangular portion for modifying the length of said apparent optical path and a triangular portion for modifying the length of said apparent optical path and for redirecting said at least one lateral image (11, 12, 13, 14),

in a way to satisfy the equation

$$b + \frac{d}{2} + \frac{h}{2} = (l+d) \cdot \frac{(n-1)}{n}$$

in which said b is the distance between said object and said prism; d is the thickness of said prism; h is the height of said object; I is the length of the rectangular portion of the prism; and n is the refraction index of said prism.

2. Module of claim 1, said optical system (7) comprising a second prism (72) or a mirror for redirecting said central image (10) and said at least lateral image (11, 12, 13, 14) in the direction of said image capture device(70).

3. Module of claim 2, comprising a first flash (50) for illumining said upper or lower side and at least one annular flash (51, 52).

4. Module of claim 3, wherein the illumination direction of said first flash is perpendicular to said upper and lower surface.

5. Module of claim 4, wherein the light of said first flash traverses said second prism (71) or mirror.

**Patentansprüche**

1. Modul für die optische Inspektion von Objekten, umfassend eine optische Vorrichtung zur Darstellung einer zentralen Darstellung (10) der oberen oder unteren Seite des Objekts (1) und mindestens eine seitliche Darstellung (11, 12, 13, 14) von mindestens einer Seite des besagten Objekts (1),

wobei die Länge des realen optischen Weges der besagten Darstellung (10) von der Länge des realen optischen Weges von mindestens einer seitlichen Darstellung (11, 12, 13, 14) verschieden ist,

die Vorrichtung zusätzlich ein optisches System (7), was es erlaubt, eine zentrale Darstellung des Objekts (1) und mindestens eine seitliche Darstellung (11, 12, 13, 14) des Objekts (1) gleichzeitig aufzunehmen, und mindestens ein Prisma umfasst,

wobei die Länge des scheinbaren optischen Wegs der zentralen Darstellung (10) gleich der Länge des scheinbaren optischen Wegs der mindestens einer seitlichen Darstellung (11, 12, 13, 14) ist,

**gekennzeichnet dadurch, dass** der Querschnitt des besagten Prismas trapezoidal ist und aus einem rechteckigen Teil besteht, um die Länge des scheinbaren optischen Wegs zu verändern, und aus eine dreieckigen Teil, um die Länge des scheinbaren optischen Wegs zu verändern und besagte mindestens eine Darstellung (11, 12, 13, 14) umzuleiten, in einer Art, um die Formel

$$b + \frac{d}{2} + \frac{h}{2} = (l+d) \cdot \frac{(n-1)}{n}$$

zu erfüllen, in welcher b der Abstand zwischen dem Objekt und besagtem Prisma ist; d ist die Dicke des besagten Prismas; h ist die Höhe des Objekts; I ist die Länge des rechteckigen Teils des Primas; und n ist der Brechungsindex von besagtem Prisma.

2. Modul gemäss Anspruch 1, wobei besagtes optisches System (7) ein zweites Prisma (72) oder einen Spiegel umfasst, um besagte zentrale Darstellung (10) und besagtes seitliche Darstellung (11, 12, 13, 14) in die Richtung von besagter Bildaufnahmevorrichtung (70).

3. Modul gemäss Anspruch 2, umfassend einen ersten Blitz (50), um besagte obere oder untere Seite zu beleuchten, und mindestens einen ringförmigen Blitz (51, 52).

4. Modul gemäss Anspruch 3, in welchem die Beleuchtungsrichtung von besagtem Blitz senkrecht zur besagten oberen und unteren Oberfläche ist.

5. Modul gemäss Anspruch 4, wobei das Licht von besagtem erstem Blitz durch besagtes zweite Prisma (71) oder Spiegel hindurchgeht.

Fig. 1

Fig. 2

Fig. 3

Fig. 4

Fig. 5

Fig. 6

EP 1 602 001 B1

Fig. 7

**RÉFÉRENCES CITÉES DANS LA DESCRIPTION**

**Documents brevets cités dans la description**

- WO 0244651 A
- EP 1139090 A2
- DE 19821800
- WO 10217357 A